# EUROPEAN PATENT SPECIFICATION

(11) **EP 4 741 875 B1**
(45) Date of publication and mention of the grant of the patent: **07.10.2026**
(21) Application number: 24211516.0
(22) Date of filing: 07.11.2024
(51) Int. Cl.: G01S 13/42, G01S 13/56, G01S 7/41, G01S 13/536

(54) **A METHOD AND A DEVICE FOR DETERMINING OCCUPIED POSITIONS IN A SPACE**
VERFAHREN UND VORRICHTUNG ZUR BESTIMMUNG DER BESETZTEN POSITIONEN IN EINEM RAUM
PROCÉDÉ ET DISPOSITIF POUR DÉTERMINER DES POSITIONS OCCUPÉES DANS UN ESPACE

(43) Date of publication of application: 13.05.2026
(73) Proprietor: Axis AB, 223 69 Lund (SE)
(72) Inventor: Kjellson, Christoffer, 223 69 Lund (SE)
(74) Representative: AWA Sweden AB

(56) References cited:
- US-A1- 2024 053 464
- JACOPO PEGORARO ET AL: "Multi-Person Continuous Tracking and Identification from mm-Wave micro-Doppler Signatures", ARXIV.ORG, CORNELL UNIVERSITY LIBRARY, 201 OLIN LIBRARY CORNELL UNIVERSITY ITHACA, NY 14853, 7 March 2020 (2020-03-07), XP081617085
- WATANABE TAKU ET AL: "Multiple-person Tracking with mmWave Radar Using Adaptive Clustering and Ghost Removing", 2023 IEEE SMART WORLD CONGRESS (SWC), IEEE, 28 August 2023 (2023-08-28), pages 668 - 675, XP034563242, DOI: 10.1109/SWC57546.2023.10448562

## Description

### Technical field

The present invention relates to the field occupancy detection in a space. In particular, it relates to a method and a system for determining occupied positions in a space by using radar technology.

### Background

In various environments, such as offices, public spaces, or industrial facilities, it is often valuable to know the number of individuals present and their spatial locations within the environment. Such information can be used for optimizing resource allocation and improving operational efficiency. For instance, in an office setting, understanding which desks are occupied and for how long can help facility managers optimize desk layouts, reduce energy consumption, and improve employee productivity.

However, traditional methods for determining occupancy, such as analyzing images captured by surveillance cameras, may not always be feasible due to concerns about individual privacy. Radar technology offers a promising alternative for detecting occupancy without compromising individual privacy. By emitting radio waves and measuring the reflections, radar systems can detect the presence and location of objects within a given space.

JACOPO PEGORARO ET AL: "Multi-Person Continuous Tracking and Identification from mm-Wave micro-Doppler Signatures", ARXIV.ORG, CORNELL UNIVERSITY LIBRARY, 201 OLIN LIBRARY CORNELL UNIVERSITY ITHACA, NY 14853, 7 March 2020 (2020-03-07), XP081617085, features a novel signal processing pipeline for tracking and identification from mm-wave radio signals: first, the signal is filtered to remove artifacts, reflections and random noise that do not originate from humans, secondly, a density-based classification algorithm is executed to separate the Doppler signatures of different users. The last two blocks in the process are trajectory tracking and user identification.

US 2024/053464 discloses a system comprising a plurality of radar systems, and a described use case is to detect falls by human subjects, especially as these falls may occur at night, when a radar system is useful. The document further discloses clustering of data points in each frame to define clusters, and a processor configured to discard clusters that have fewer than a threshold number of data points.

WATANABE TAKU ET AL: "Multiple-person Tracking with mmWave Radar Using Adaptive Clustering and Ghost Removing", 2023 IEEE SMART WORLD CONGRESS (SWC), IEEE, 28 August 2023 (2023-08-28), pages 668-675, XP034563242, DOI: 10.1109/SWC57546.2023.10448562, discloses a system for tracking multiple people indoors using mmWave radar. A Doppler-based algorithm is used to detect stationary individuals. This is particularly useful in care facilities where elderly people may spend long periods of time sitting or lying down.A challenge in occupancy detection is to distinguish between positions in the space that are occupied for a longer period of time, like desks occupied by individuals, and temporary presence in the space, such as individuals passing through the space. Thus, it is desirable to detect the locations of objects that remain at the same location over a period of time and disregard other temporarily present objects.To address these issues, there is hence a need for a reliable method that can accurately detect occupied positions within a scene using radar technology. Such a method would enable the identification of areas with prolonged occupation while still respecting individual privacy.

### Summary of the invention

In view of the above, it is thus an object of the present invention to mitigate the above problems and provide a method and device that allows for determining occupied positions in a scene by using detections from a radar.

According to a first aspect, the above object is achieved by a method for determining occupied positions in a space. The method comprises:
receiving detections of object movement from a radar monitoring the space, wherein each detection is associated with a position in the space and a time point when the detection was made, wherein the received detections include detections from a plurality of time points corresponding to a plurality of frames of radar data,
accumulating detections that have a time point within a first time period of predefined duration, wherein the first time period (T1) of predefined duration includes several frames of radar data,
identifying a set of clusters of detections in the space by analyzing similarity in position of the accumulated detections,
wherein each cluster includes a plurality of detections that were made at various time points during the first time period,
removing, from the set of clusters, any cluster whose detections are temporally distributed within a proportion of the first time period which is below a predefined proportion threshold, and
after the removing, determining that positions in the space that correspond to the set of clusters were occupied during the first time period.

The invention relies on the idea that even if an object which is capable of moving remains at the same position within an environment it will still make small movements every now and then, referred to herein as micro-movements. For example, a person sitting at a desk will make some movements with the arms, torso, and head while working. These movements can be detected by the radar and will be located at roughly the same location in the space, but will typically not be detected so often by the radar. However, if radar detections are accumulated over a period of time, the detections stemming from movable objects that remain at the same position will form clusters in the space. This is in contrast to the movement of an object that moves around in the space, i.e., that changes its location. That movement will be distributed over a larger area in the space. Thus, when radar detections are accumulated over time, the detections stemming from objects that move around in the space will typically be spread out in the space and not form clusters. The accumulation of detections over time in combination with spatial clustering hence allows movable objects that remain at the same position for a prolonged period of time, i.e., during the first time period, to be distinguished from those that move around in the space. Moreover, even if the detections of an object that moves around in the space happen to form a cluster in the space, for instance due to the object making a short stop at some position, the detections in the cluster will be limited to a time window which is short in relation to the first time period. Therefore, any spatial cluster whose associated radar detections are temporally distributed during a limited proportion of the first time period is preferably removed. In this way, the risk that an object which makes short stops when passing through the space is mistaken for an object that remain at the same position for a prolonged period of time is reduced. By an *occupied position in the space* is generally meant a position in the space at which an object that is capable of moving remains for a prolonged period of time. The object may be any type of object whose movements are detectable by a radar, such as a person. The space may also be referred to as a scene. The prolonged period of time is quantified by the first time period having a predefined duration. Thus, a position in the space is considered occupied if an object was present at the position at least for the first time period.

The *predefined duration of the first time period* may be set depending on the use case at hand to reflect a desired amount of time that an object should stay at a position in order for it to count as an occupation of the position. When setting the predefined duration, the data acquisition rate of the radar and how often micro-movements of the objects are expected may also be taken into consideration to assure that enough detections of the micro-movements for formation of clusters are received during the first period. A suitable value of the predefined duration may be found by applying the method to a test space of known occupation using different values of the predefined duration.

*By accumulating detections* is generally meant that detections are accumulated or aggregated into a common dataset. In particular, by accumulating detections that have a time point within a first time period of predefined duration a dataset which includes the detections that have a time point within the first time period of predefined duration is formed.

By a *cluster of detections* is meant a group of detections being associated with similar positions, i.e., a group of detections which are associated with positions within a common region of the space. The clusters are hence spatial clusters which are identified by analyzing the positions of the detections. For example, detections being associated with positions that fall within a region in the space where the spatial density of detections (detections per area unit) exceeds a predefined threshold may be said to form a cluster. A region with high spatial density reflects that there are many detections having a position in the region, i.e., that the detections in the region are associated with similar positions.

By a *set of clusters* is meant a set which includes one or more clusters.

By a *temporal distribution* of detections in a cluster is meant the distribution of the time points of the detections that belong to the cluster. Thus, the temporal distribution reflects when during the first time period the detections in the cluster were made.

Each detection may further be associated with a velocity of the object movement. Moreover, in the step of accumulating, only detections having a velocity below a first velocity threshold may be accumulated. The movements of objects that move around in the scene include a wide range of velocity components, whereas the micro-movements of the moving objects that stay in the same location mostly include low velocity components, such as velocities in relation to the radar that are below a first velocity threshold. By only accumulating radar detections being associated with low velocities, radar detections which most likely are associated with objects that move around in the scene are filtered out. In this way, the risk that an object which passes through the scene is mistaken for an object that exhibits micro-movements while staying in the same location is further reduced.

The first velocity threshold may be lower than an average walking speed of a person. In this way, radar detections being associated with the velocity of a person walking around in the scene will be excluded from the accumulation and the subsequent clustering. In one example, the average walking speed may be set to 1 m/s.

An additional challenge, especially in indoor environments, is that the radar may produce ghost detections, sometimes also referred to as multipath radar detections. This means that an object may not only give rise to detections at its actual location, but also at other locations in the scene where the object is not located due to reflections of the radar signals in surfaces which are present in the scene. If ghost detections are present, one may hence arrive at the erroneous conclusion that these other locations in the scene are occupied by an object. To deal with the ghost detections, the step of removing may further comprise removing, from the set of clusters, any cluster for which: a temporal correlation between the detections of the cluster and the detections of another cluster in the set of clusters is above a temporal correlation threshold, and a distance from the detections of the cluster to the radar is larger than a distance from the detections of said another cluster to the radar. The inventors have realized that there is a strong temporal correlation between the detections that correspond to a real object and the detections that correspond to the ghost of that object. Therefore, the presence of ghost clusters can be identified by studying the mutual temporal correlation between the detections that are associated with different clusters. Once two (or more) temporally correlated clusters have been found, the cluster(s) that are positioned furthest away from the radar can be removed, thereby only keeping the closest one. This since the ghost detections will be located further away from the radar sensor than the corresponding real radar detections due to the longer path of the reflected radar signals giving rise to the ghost detections.

The proportion of the first time period within which the detections of a cluster are temporally distributed may be determined in different ways. In one embodiment, the proportion of the first time period within which the detections of a cluster are temporally distributed is determined as a proportion of the first time period during which the detections of the cluster were present. For example, time portions when the detections of the cluster were present may be identified, and a total duration of these time portions may be set in relation to the duration of the first time period to determine the proportion. In another embodiment, the proportion of the first time period within which the detections of a cluster are temporally distributed is determined by comparing a dispersion measure of the time points of the detections of the cluster to the predefined duration of the first time period. For example, the range of the time points of the detections in the cluster (the largest time point minus the smallest time point) or the standard deviation of the detections in the cluster may be set in relation to the duration of the first time period. Both these embodiments allow clusters which have their detections temporally distributed in a limited proportion of the first time period to be removed.

The step of identifying a set of clusters of detections in the space may include applying a clustering algorithm to positions of the accumulated detections. In this way, groups of detections having similar positions may be found. This may include applying a K-means clustering algorithm or other clustering algorithms used in the art.

In some embodiments, the step of identifying a set of clusters of detections in the space includes generating an occupancy map of the space by defining a plurality of grid cells in the space, and counting for each grid cell how many of the accumulated detections that have a position in the grid cell, and identifying the set of clusters by performing blob detection in the occupancy map of the space. This may be seen as a special case of a clustering algorithm. The occupancy map is a histogram of the positions of the accumulated detections. As such, it represents the spatial density of the detections in the space. Detections having similar positions will end up in the same or neighboring grid cells and contribute to the count for those grid cells. Hence a cluster of detections in the space corresponds to a region in the occupancy map having an elevated count of detections, i.e., a region with high spatial density of detections. Such regions may be found by applying a blob detection to the occupancy map.

As known in the art, blob detection refers to a method which detects regions in a digital image that differ in properties compared to surrounding regions. In this case, the occupancy map may be said to constitute a digital image in which each grid cell corresponds to a pixel position and the detection count in each grid cell corresponds to the pixel value. The blob detection hence detects regions in the occupancy map having a detection count that differs compared to surrounding regions. For example, the blob detection may include identifying local maxima in the occupancy map. This corresponds to identifying peaks in the occupancy map, i.e., regions where the spatial density of detections peaks. These embodiments are advantageous in that the clusters of detections in the space may be identified by using standard image processing tools, including blob detection.

The method may be repeated for a subsequent time period of predefined duration. This allows for determining how the occupation in the space varies over time. The subsequent time period of predefined duration may be non-overlapping with the first time period. However, embodiments where the subsequent time period has an overlap with the first time period may also be envisaged. For example, a sliding time window approach could be used where the method is applied repeatedly at several points in time to a preceding time window of the predefined duration.

Moreover, the method may comprise tracking the positions in the space that are determined to be occupied between the first time period and the subsequent time period. When the method is applied to different time periods, an occupied position corresponding to cluster caused by an object during the first time period and an occupied position corresponding to a cluster caused by the same object during a subsequent time period may not have exactly the same position. By performing tracking between the time periods, these occupied positions may be associated with each other to deduce that they originated from the same object.

As a further option, the method may comprise removing tracks which are outside of a region of interest in the space. In this way, tracks that are possible false detections or of limited interest to the user can be removed. Similarly, detections or clusters that are positioned outside of a region of interest in the space may be removed. For example, the region of interest could correspond to a room in the space, or could include desk regions in the space. The region of interest could either be user-defined or automatically identified from a plan of the space.

According to a second aspect, the above object is achieved by a device for determining occupied positions in a space. The device comprises circuitry configured to:
receive detections of object movement from a radar monitoring the space, wherein each detection is associated with a position in the space and a time point when the detection was made, wherein the received detections include detections from a plurality of time points corresponding to a plurality of frames of radar data,
accumulate detections that have a time point within a first time period of predefined duration, wherein the first time period (T1) of predefined duration includes several frames of radar data,
identify a set of clusters of detections in the space by analyzing similarity in position of the accumulated detections,
wherein each cluster includes a plurality of detections that were made at various time points during the first time period,
remove, from the set of clusters, any cluster whose detections are temporally distributed within a proportion of the first time period which is below a predefined proportion threshold, and
after the removal, determine that positions in the space that correspond to the set of clusters were occupied during the first time period.

According to a third aspect of the invention, the above object is achieved by a non-transitory computer-readable medium comprising computer program code which, when executed by a device with processing capability, causes the device to carry out the method of the first aspect.

The second and third aspects may generally have the same features and advantages as the first aspect..

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Fig. 1 illustrates an example space in which exemplary embodiments may be used to determine occupied positions.
Fig. 2 illustrates a system including a radar and a device for determining occupied positions in a space.
Fig. 3 is a flowchart of a method for determining occupied positions in a space according to embodiments.
Fig. 4 illustrates a timeline along which a radar outputs detections during a time period.
Fig. 5 schematically illustrates positions of detections that were accumulated during the time period of Fig. 4.
Fig. 6 shows an occupancy map generated for the example space of Fig. 1.
Fig. 7 shows a set of clusters identified from the occupancy map of Fig. 6.
Fig. 8a and Fig. 8b show a temporal distribution of the detections in a first cluster and a second cluster, respectively.
Fig. 9 shows a set of clusters that remain after the cluster removal step S08a of Fig. 3.
Fig. 10 shows the time points of the detections of two of the clusters of Fig. 9 along a common timeline.

### Detailed description of embodiments

The present invention will now be described more fully hereinafter with reference to the accompanying drawings, in which embodiments of the invention are shown.

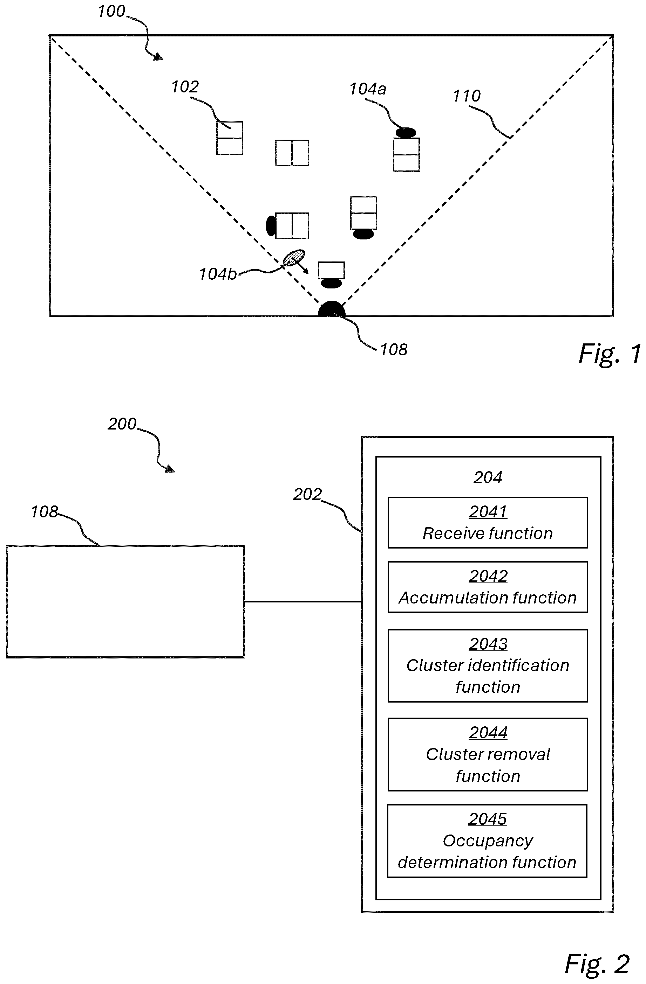

Fig. 1 illustrates a space 100 in which one would like to determine the occupied positions. The exemplary space 100 is an indoor environment, and more specifically an office space in a building. In the space 100 there are a number of desks 102. Some of the desks are occupied by persons 104a who sit down and work in front of a computer, and other desks are not occupied at the moment. The persons 104a are examples of objects that are stationary in the sense that they stay in the same location in the space 100. Still, while staying at the same location, they will exhibit motion from time to time when working at the desks 102. For example, the persons 104a may move their arms, hands, head, and torso while working. In the space 100 there may also be walls or other surfaces, such as whiteboards, in which radar signals may be reflected. In addition to the persons 104a that occupy the desks, other persons 104b may temporarily be present in the space 100. In comparison to the persons 104a that occupy the desks 102, these other persons 104b are only temporarily present in the space 100. For example, these other persons 104b may move around in the space 100 during a short amount of time, such as just passing through the space 100. In the example of Fig. 1, the person 104b is assumed to be a cleaning lady who comes into the space 100 and walks around and spends short periods of time in multiple locations to clean the desks 102 before leaving again. In another example, the person 104b could be a colleague who makes a brief visit, thus staying for a considerably shorter time than the other persons 104a.

A radar 108, such as a frequency modulated continuous wave (FMCW) radar, is arranged in the space 100. The radar 108 has a field of view 110. Within the field of view 110, the radar 108 can make detections of object movement, such as detecting movements of persons 104a occupying the desks 102 and the temporarily present persons 104b. For example, the radar 108 may be capable of measuring range, azimuth angle, and radial velocity of moving objects in the scene. The range and azimuth may in turn be translated into a two-dimensional position coordinate in the space 100. Radars 108 which are further able to measure the elevation angle, and hence produce a three-dimensional position coordinate in the space 100, could also be used for implementing embodiments described herein.

Fig. 2 illustrates a system 200 comprising a radar 108, and a device 202 for determining occupied positions in a space, such as the space shown in Fig. 1. The device 202 may be included in the radar 108 or may be provided separately from the radar 108. The device 202 is configured to receive and analyze data from the radar 108. In particular, the device 202 is configured to receive detections of object movement from the radar 108 and determine occupied positions in the space that the radar 108 monitors. The data may be received over a wired or wireless connection.

The device 202 includes circuitry 204. The circuitry 204 is configured to implement various functions of the device 202. For example, it is configured to implement a receive function 2041, an accumulation function 2042, a cluster identification function 2043, a cluster removal function 2044, and an occupancy determination function 2045.

In some implementations, each of the functions 2041, 2042, 2043, 2044, 2045 may correspond to circuitry which is dedicated and specifically designed to provide the functionality. The circuitry 204 may be in the form of one or more integrated circuits, such as one or more application specific integrated circuits or one or more field-programmable gate arrays. By way of example, the accumulation function 2043 may thus comprise circuitry which, when in use, accumulates detections that have a time point within a first time period of predefined duration.

In other implementations, the circuitry may instead be in the form of a processor, such as a central processing unit or microprocessor, which in association with computer code instructions stored on a (non-transitory) computer-readable medium, such as a non-volatile memory, causes the device 202 to carry out any method disclosed herein. Examples of non-volatile memory include read-only memory, flash memory, ferroelectric RAM, magnetic computer storage devices, optical discs, and the like. In this case, the functions 2041, 2042, 2043, 2044, 2045 may thus each correspond to a portion of computer code instructions stored on the computer-readable medium, that, when executed by the processor, causes the device 202 to carry out the respective function.

It is to be understood that it is also possible to have a combination of a the above-mentioned implementations, meaning that some of the functions 2041, 2042, 2043, 2044, 2045 correspond to circuitry which is dedicated and specifically designed to carry out the function, and other correspond to a portion of computer code instructions that, when executed by the processor, causes the device 202 to carry out the function

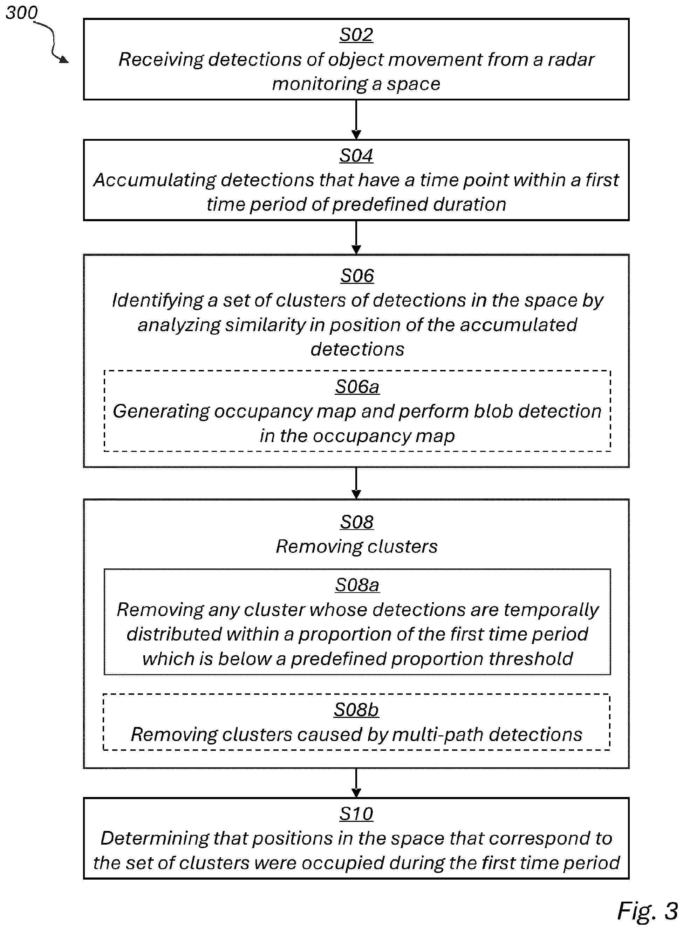

The operation of the device 202 when carrying out a method 300 for determining occupied positions in a space will now be described with reference to the flow chart of Fig. 3 and with further reference to Figs 1 and 2.

In step S02, the device 202 receives detections of object movement from the radar 108 monitoring the space 100. Each detection is associated with a position in the space 100 and a time point when the detection was made. Depending on the capabilities of the radar 108, the position may be described by a coordinate (x, y) in a two-dimensional coordinate system or a coordinate (x, y, z) in a three-dimensional coordinate system, such as a Cartesian coordinate system. Each detection may further be associated with a velocity of the object movement. The radar 108 may hence not only be able to provide time and positional data for the detections, but also a velocity of the detections. The velocity refers to the velocity of the object movement in a radial direction of the radar 108.

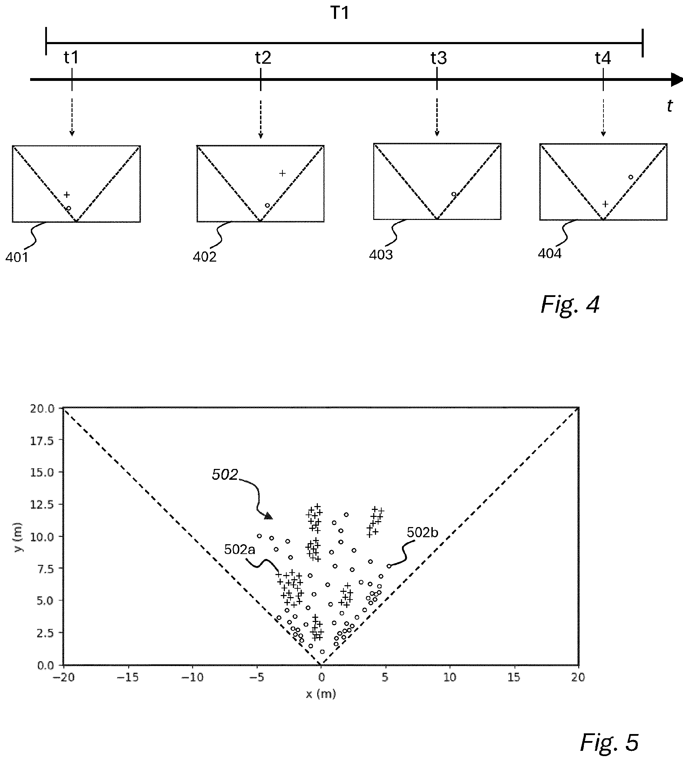

The received detections include detections from a plurality of time points. For example, the radar 108 may operate at a certain rate to output detections a certain number of times each second, such as ten times per second. This rate may be referred to as the frame rate of the radar 108, and the detections which are output at each time point may be said to form a frame of radar data. During a first time period of predefined duration, say 5 minutes, the radar 108 may hence output detections thousands of times. This is further illustrated in Fig. 4 which shows a timeline along which the radar 108 outputs detections at a certain frame rate during the time period T1. Fig. 4 also illustrates four exemplary frames 401, 402, 403, 404 of detections produced by the radar during the time period T1. It is understood that these four frames are just a few out of many (in the order of thousands) frames produced during the first time period T1. The example frames 401, 402, 403, 404 each correspond to a respective time point, here denoted by t1, t2, t3, t4. In each frame, there are detections of object movement. In particular, the position of the detected movement in relation to the radar is provided in the frame. Objects that move around in the scene 100, such as the person 104b of Fig. 1, will typically give rise to detections in each radar frame during the time the objects are present. These detections are illustrated by circles in the exemplary frames of Fig. 4. However, as can be seen, the positions associated with these detections will typically vary from frame to frame as the objects move around. In contrast, objects that stay at the same location but make movements from time to time, such as the persons 104a occupying the desks 102, give rise to detections which are sparse in time. However, detections of the same object will have similar positions since the objects stay at the same location. Such detections are illustrated by plus-signs in Fig. 4. Similar to Fig. 1, the dashed lines in the frames of Fig. 4 indicates the field of view of the radar.

Notably, the detections received in step S02 are detections of object movement and does hence not include detections of purely stationary objects i.e., objects that do not move at all. The radar 108 may generally be able to detect moving objects as well as purely stationary objects. However, for the purposes of this invention only detections of non-zero velocity (non-zero Doppler) are used and detections corresponding to zero velocity (zero Doppler) are not included in the detections received in step S02 of the method 300. More precisely, for radar data provided in "bins" defining the resolution in position and velocity, detections in the velocity bin that includes zero velocity are not part of the input that the method operates on. However, detections in the velocity bins that are closest to the zero-velocity bin are preferably included as they capture important information about micro-movements of objects. To exemplify, for a velocity bin size of 0.06 m/s, the zero-velocity bin ranges from -0.03 m/s to 0.03 m/s and the detections received in step S02 are associated with absolute velocities larger than 0.03 m/s.

In step S04, the device 202 accumulates detections that have a time point within a first time period of predefined duration, such as the time period T1 shown in Fig. 4. For example, all detections of object movement that were made during the first time period may be aggregated into a common data set. In other examples, some detections are not included in the aggregation. In particular, only detections having a velocity below a first velocity threshold may be accumulated in step S04. The first velocity threshold may be set to be lower than an average walking speed of a person. For example, the average walking speed of a person may be 1 m/s, and the first velocity threshold is hence set to be below 1 m/s, such as 0.3 m/s.

Fig. 5 schematically illustrates positions of a subset of detections 502 that were accumulated during the time period T1 of Fig. 4. In this case, the detections 502 are each associated with a two-dimensional position coordinate defined in relation to the radar 108 and hence form a point cloud in two dimensions. It is understood that in the case of three-dimensional position coordinates the positions would instead form a point cloud in three dimensions. Detections 502b originating from the cleaning lady 104b of the Fig. 1 example are illustrated by circles, and detections 502a originating from the persons 104a sitting at the desks are illustrated by plus-signs. The different symbols are purely for illustration reasons since the device 202 is at this stage of the method ignorant of which detections are caused by objects 104a that remain at a same location and which detections are caused by objects 104b that move around in the space 100. As can be seen, the detections 502a from the persons 104a at the desks are present in clusters while the detections 502b from the cleaning lady 104b are more spread out in the space 100. For ease of illustration, only a subset of detections is shown. In a real application it is understood that the number of detections typically will be much larger.

One reason for accumulating the detections is to gather enough detections from the seldom-moving objects 104a so that the positions of the detections form clusters that are identifiable by a clustering algorithm. The predefined duration of the first time period T1 is therefore preferably selected such that enough detections from these objects are received. A suitable value of the first time period T1 may depend on various factors, such as how often the objects 104a move, the frame rate of the radar 108 and how the clusters are identified. In a practical application, one can find a suitable duration of the first time period by applying the method using time periods of different durations to a test scene in which the occupied positions are known, and select a time period for which the method is able to determine the known occupied positions.

In step S06 of the method, the device 202 identifies a set of clusters of detections in the space 100 by analyzing similarity in position of the accumulated detections 502. For example, the device 202 may analyze the positions of the accumulated detections 502 to find groups of detections 502 that have similar positions. For this purpose, the device 202 may apply a clustering algorithm to the positions of the accumulated detections 502. Examples of clustering algorithms that may be used are hierarchical clustering algorithms, centroid-based clustering algorithms, such as the-k-means algorithm, model-based clustering algorithms, such as the expectation-maximization algorithm, density-based clustering algorithms, such as the DBSCAN algorithm, and grid-based clustering algorithms, such as the STING and CLIQUE methods. The resulting clusters each includes a group of detections and is associated with a spatial region in the space 100 defined by the spatial positions of the detections in the cluster.

In some embodiments, the similarity in position of the accumulated detections 502 is analyzed by using an occupancy map which is indicative of the spatial density of the detections in different regions of the space 100. A spatial region with a higher value in the occupancy map indicates that there are a higher number of detections with similar positions in that spatial region of the space 100 compared to a spatial region having a lower value in the occupancy map. Clusters of detections in the space 100 will hence correspond to spatial regions having an elevated count value in the occupancy map. Accordingly, identifying a set of clusters of detections in the space 100 by analyzing similarity in position of the accumulated detections 502 may be performed by finding spatial regions in the occupancy map that have an elevated count value, such as by detecting blobs or peaks in the occupancy map.

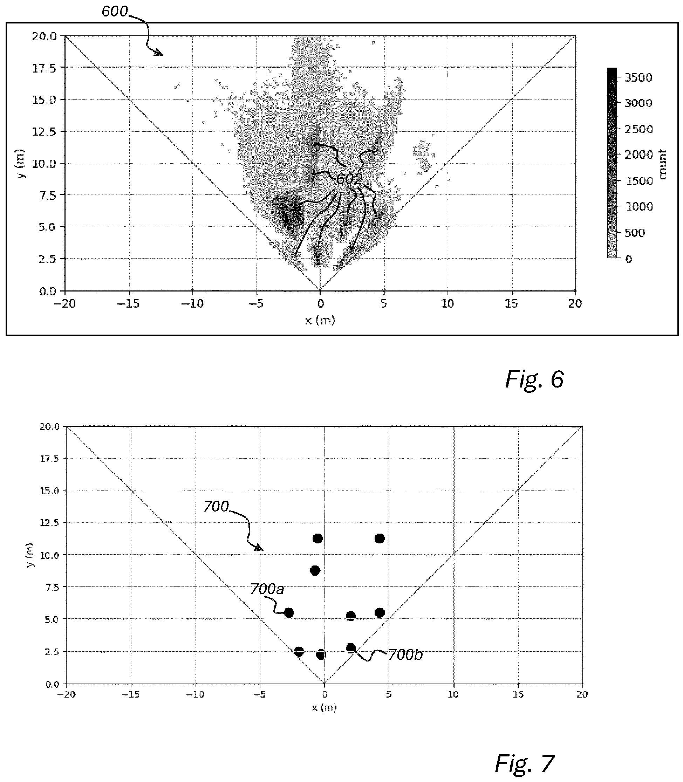

In more detail, in a sub-step S06a, the device 202 defines a plurality of grid cells in the space 100. For each grid cell, the device 202 then counts how many of the accumulated detections 502 that have a position in the grid cell. In this way the occupancy map of the space 100 is generated. The occupancy map may be seen as a histogram which is indicative of the spatial density of the accumulated detections 502 in different spatial regions of the space 100. Fig. 6 shows an occupancy map 600 generated for the example scenario of Fig. 1 where some objects 104a (persons at the desks) remain at the same location in the space 100 during the first time period T1 and another object 104b (the cleaning lady) moves around in the space 100 during the first time period T1. In this example, the resolution of the grid cells is 25x25 cm² , the duration of the first time period T1 is 15 min, and the frame rate of the radar is 10 Hz. As can be seen, there are regions 602 in the occupancy map 600 that have an elevated count of detections compared to surrounding regions in the occupancy map 600. This means that there are more detections in these regions 602 compared to other regions of the occupancy map 600. The regions 602 may be referred to as blobs or peak regions of the occupancy map 600.

In order to identify the set of clusters in the space 100, a set of regions 602 having an elevated value in the occupancy map 600 may be detected. In particular, in sub-step S06a the device 202 may perform blob detection to the occupancy map 600 of the space 100. Many such blob detection methods are known in the art and may be used for this purpose. For example, blob detection methods which includes identifying peaks (local maxima) in the occupancy map may be used. That is, each cluster may be identified as a spatial region around a peak in the occupancy map. Preferably, in order to reduce the impact of noise, the occupancy map 600 is first subject to smoothing before the peaks are identified.

Fig. 7 shows a set of clusters 700 identified by identifying peaks (local maxima) in the occupancy map 600 of Fig. 6. In this case, nine peaks and thereby nine clusters were identified. Fig. 7 shows the positions of the peaks in the space. This corresponds to the center positions of the clusters. In addition, each cluster is associated with a certain spatial extent corresponding to a spatial region around its center position. In the example of Fig. 7, the spatial region may correspond to a width of the peak or to a predefined spatial extent that matches the size of the objects (in this case persons) under consideration. In general, the spatial region associated with a cluster corresponds to a spatial extent of the cluster determined by the clustering algorithm being used. Each cluster includes those detections that fall within the spatial extent of the cluster. As can be seen, the number of clusters are in this example larger than the number of persons 104a that occupied the desks in the Fig. 1 scenario. One of the reasons is probably that the cleaning lady 104b briefly stopped at various locations when walking around in the space 100, for instance for cleaning different desks. Accordingly, some of the detected clusters are false detections and should be removed before the occupation of the space 100 is determined.

In step S08, the device 202 proceeds to remove clusters which are false detections, i.e., do not correspond to an object 104a that remained at the same location during the first time period T1. In order to do so, the device 202 analyzes the temporal distribution of the detections in the clusters 700. Each of the clusters 700 includes a plurality of detections that were made at various time points during the first time period T1. Accordingly, these time points will be spread out, i.e., have a certain temporal distribution over the time period T1.

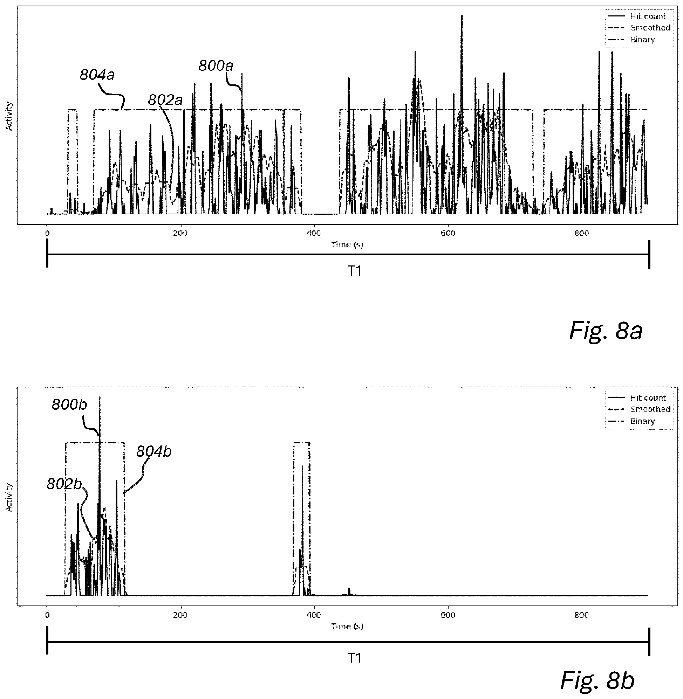

Fig. 8a shows a temporal distribution 800a (solid line) of the detections in a first cluster 700a from the set of clusters 700 of Fig. 7, with time on the x-axis and the number of detections at each time point on the y-axis. The temporal distribution 800a is hence a histogram of the time points of the detections. As can be seen, the detections are temporally distributed over the whole first time period T1. In other words, the detections are in this case temporally distributed within a proportion of the time interval which corresponds to 100% of the first time period T1. This indicates that the object that caused the detections remained at the spatial position of the cluster 700a during the whole first time period T1. In the scenario of Fig. 1, the object that caused the detections is likely one of the persons 104a at the desks.

Fig. 8b shows a temporal distribution 800b (solid line) of the detections in a second cluster 700b from the set of clusters 700 of Fig. 7, again with time on the x-axis and the number of detections at each time point on the y-axis. In this case, the detections are only temporally distributed over a limited portion of the time period T1. In particular, detections are in this case temporally distributed within a proportion of the time interval which is only about 15% of the first time period T1. This indicates that the object that caused the detections only temporarily remained at the spatial position of the cluster 700b during the first time period T1. That is, in the scenario of Fig. 1 these detections are likely caused by the cleaning lady 104b or the colleague who is on a brief visit.

By analyzing the temporal distributions of the detections in the clusters 700, and especially the proportion of the first time interval T1 within which the detections are temporally distributed, the device 202 may hence determine which were caused by objects 104a that remained at the same position during the time period T1 and which were caused by objects 104b that only temporarily were present at a spatial position during the time period T1.

The device 202 may take different approaches for determining the proportion of the time interval T1 within which the detections of a cluster are distributed. In a first approach, the device 202 determines the proportion of the first time period as a proportion of the first time period during which the detections of the cluster were present. This means that the device 202 estimates the time that the object spent at the spatial location of the cluster. This approach is further illustrated in Figs 8a and 8b. The device 202 may first optionally apply a smoothing filter, such as a Gaussian filter, to the temporal distributions 800a and 800b. This results in the smoothed temporal distributions 802a and 802b (dashed). The smoothed temporal distributions 802a and 802b (or the original temporal distributions 800a, 800b if no smoothing is used) are then compared to a threshold value. The result of the thresholding operation is illustrated by the binary curves 804a and 804b (dahs-dotted), which take a zero value when the smoothed temporal distributions 802a and 802b are below the threshold and a non-zero value when they are equal to or above the threshold. The proportion of the first time period T1 may then be determined as the proportion of the time period when the smoothed temporal distributions 802a and 802b are equal to or exceeds the threshold value, i.e., when the binary curves 804a and 804b takes a non-zero value. In the example of Fig. 8a the proportion is hence obtained by summing the duration of the time portions when the binary curve 804a takes a non-zero value and dividing the sum by the duration of the first time interval T1. Similarly, in the example of Fig. 8b the proportion is obtained by summing the duration of the time portions when the binary curve 804b takes a non-zero value and dividing the sum by the duration of the first time interval T1.

In a second approach, the proportion of the first time period within which the detections of a cluster are temporally distributed is instead determined by comparing a dispersion measure of the time points of the detections of the cluster to the predefined duration of the first time period T1. For example, the range of the time points (i.e., the largest time point minus the smallest time point) or the standard deviation of the time points may be used as a dispersion measure.

Once the proportion of the first time interval T1 within which the detections of each cluster in the set of clusters 700 is temporally distributed has been determined, the device 202 removes from the set of clusters 700 any cluster whose detections are temporally distributed within a proportion of the first time period which is below a predefined proportion threshold, see sub-step S08a. The device 202 hence compares the time proportion determined for each cluster to a proportion threshold. Clusters that have a time proportion which is equal to or above the proportion threshold are kept in the set of clusters 700, while clusters that have a time proportion which is below the proportion threshold are removed from the set of clusters 700. In case no cluster has a time proportion below the proportion threshold, no cluster will be removed in step S08a. However, even in that case the time proportion has been determined and compared to the proportion threshold for each cluster to establish whether there was any cluster for which the time proportion was below the proportion threshold. Thus, step S08a may be said to include the sub-steps of, for each cluster, determining a proportion of the first time period T1 within which the detections of the cluster are temporally distributed, and removing the cluster from the set of clusters in case the determined proportion is below a predefined proportion threshold.

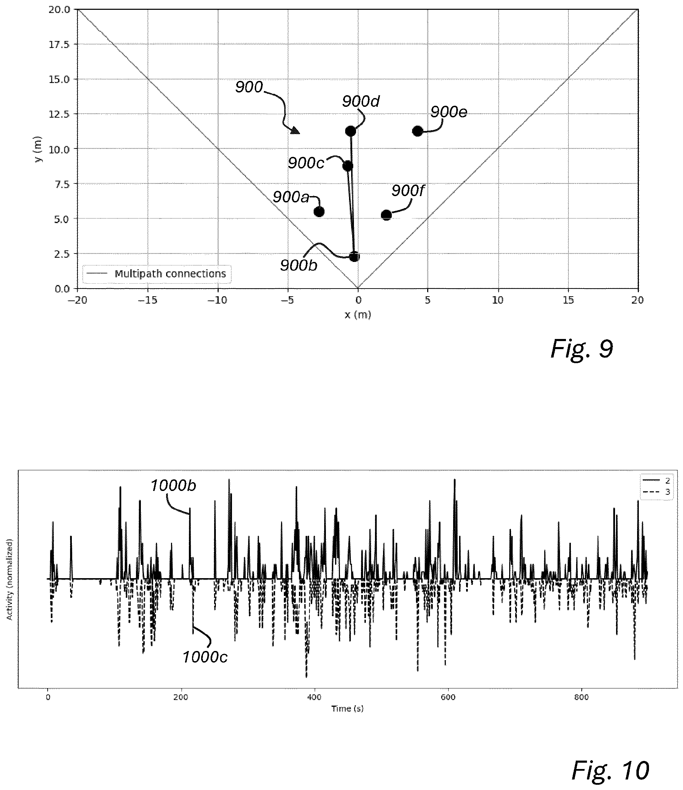

Returning to the example of Figs 7 and 8, the cluster 700a having the temporal distribution 800a shown in Fig.8a would hence be kept in set of clusters 700, and the cluster 700b having the temporal distribution 800b would be removed from the set of clusters 700. Fig. 9 shows the set of clusters 900 that remain after the removal step S08a. In this case there are six remaining clusters 900a, 900b, 900c, 900d, 900e, 900f.

Suitable values for the proportion threshold may be found by applying the method to a test scene and see what proportions result from objects that moves around in the scene, such as the cleaning lady 104b of Fig. 1. A proportion threshold in the order of magnitude of 30% has been found to be suitable for the example scenario of Fig. 1 when a first time period of 15 min duration was used.

Optionally, in some embodiments, the removing step S08 further include a sub-step S08b of removing clusters caused by multi-path detections, sometimes also referred to as ghost detections. This is especially advantageous in indoor environments and other environments where there are reflective surfaces, such as metallic fences, parked vehicles, building walls and doors. If no such reflective surfaces are present in the space 100, sub-step S08b can be omitted. Likewise, it can be omitted if a radar is used that has the capability of filtering out ghost targets detections.

A radar that monitors a moving object in a scene with many static reflective surfaces may receive both the intended detections along the line of sight to the moving target and unwanted further detections which originate from reflections of the reflective surfaces. As a result, a moving object in the space 100 that remain in the same place may give rise to more than one cluster. One cluster includes the intended detections along the line of sight to the moving object, and another cluster includes the unwanted detections that originate from reflections of the reflective surfaces.

In order to identify clusters caused by multi-path detections, the device 202 may analyze the temporal correlation between the detections of the remaining clusters, such as the clusters 900 of Fig. 9. In particular, the device 202 may analyze the temporal correlation between the detections of two clusters at a time, and repeat this for any combination of clusters in the set of clusters. This may include calculating the Pearson correlation between the time points of the detections in a first cluster to the time points of the detections in a second cluster. A high temporal correlation, i.e., if the detections in the first cluster has a tendency to be present at the same time points as the detections in the second cluster, indicates that the detections in one of the first and second clusters are multi-path detections of the detections in the other one of the first and second clusters. Accordingly, by identifying pairs of clusters for which the temporal correlation is above a temporal correlation threshold, clusters which are candidates for being multi-path targets may be identified. Differently stated, any cluster for which a temporal correlation between the detections of the cluster and the detections of another cluster in the set of clusters is above a temporal correlation threshold is a candidate for being caused by multi-path reflections. The temporal correlation threshold is again a tuning parameter, but for the example scenario of Fig. 1 a value of 0.3 was found to be appropriate when the correlation was measured as a Pearson correlation that gives values between -1 and +1 (-1 indicates full negative correlation, 0 no correlation, and +1 full positive correlation).

Fig. 10 shows the time points of the detections of the second cluster 900b and the third cluster 900c of Fig. 9 along a common timeline. The detections 1000b from the second cluster 900b are shown in the upper half and the detections 1000c from the third cluster 900c are shown in the lower half of Fig. 10. As can be seen, the detections from the two clusters 900b, 900c have a tendency to be present at the same points in time and hence have a high temporal correlation. Thus, one of clusters 900b, 900c is likely a result of multi-path reflections. The same analysis is carried out for all pairs of clusters. In the example of Fig. 9 it is assumed that a high temporal correlation is also identified for the cluster pair 900b and 900d.

When one or more candidate pairs of clusters for which the temporal correlation is above the temporal correlation threshold have been identified, the device 202 may proceed to remove one cluster for each candidate pair. In more detail, the device 202 removes the cluster in the pair which is furthest away from the radar, i.e., has its detections at a greatest distance from the radar. For example, the cluster in the pair for which a representative distance of the detections to the radar is largest may be removed. The representative distance may be a mean distance or a median distance. In the example of Fig. 9, the cluster 900c would hence be removed since it is at a larger distance from the radar than cluster 900b. For similar reasons, cluster 900d would be removed. The reason for removing the cluster which is furthest away from the radar is that the unwanted multi-path detections caused by reflections have travelled a longer path than the wanted detections along the line of sight of the radar, and therefore the measured distance from the radar for the multi-path detections will be larger than the measured distance of the non-reflected detections along the line of sight of the radar.

To sum up, in sub-step S08b, the device 202 may hence remove from the set of clusters any cluster for which a temporal correlation between the detections of the cluster and the detections of another cluster in the set of clusters is above a temporal correlation threshold, and a distance from the detections of the cluster to the radar is larger than a distance from the detections of said another cluster to the radar.

Once the cluster removal step S08 is done, the method proceeds to step S10 in which the device 202 determines that positions in the space 100 that correspond to the set of clusters were occupied during the first time period. To this end it is noted that each cluster is associated with a spatial region in the space 100 defined by the detections in the cluster. In step S10, the device 202 may hence determine that positions in the space 100 that correspond to the spatial regions associated with the clusters were occupied during the first time period. The spatial region of a cluster may for instance correspond to the spatial region spanned by the positions of the detections in the cluster, or it may correspond to a representative position of the detections in the cluster such as a mean spatial position. When an occupancy map is used to identify the clusters as described above, the position of the peak (local maxima) used to detect the cluster could be used as the representative position of the cluster.

The method 300 can hence be used to determine occupied positions in the space during a first time period. This allows the number of occupied positions during the first time period to be determined. It also allows determining whether or not a certain position in the space was occupied during the first time period.

It is further possible to monitor the occupancy in the space over time by repeating the method for subsequent time periods. For example, it may be repeated for one or more subsequent time period of predefined duration. The subsequent time periods may follow directly after each other, i.e., a second time period starts when the first time periods ends and so on. It is also possible to have a time gap between the time periods.

The positions in the space that were determined to be occupied may be tracked between the time periods. This may involve assigning a common identifier to occupied positions from different time periods that likely are caused by the same object.

In some embodiments, an occupied position associated with a second time period may be given the same identifier as an occupied position associated with a first, preceding, time period if the occupied positions are spatially close to each other, e.g., closer than a threshold distance. If no spatially similar position can be found in the first time period, a new track may be started for the occupied position in the second time period. Similarly, if no spatially similar position can be found in the second time period for an occupied position in the first time period, the track which includes the occupied position in the first time period may be ended. A new track may be assigned an arbitrary identifier which currently is not used by another track, or it can be assigned an identifier which depends on its position in the space. For example, different spatial regions in the space, such as the desks in the Fig. 1 example, may be associated with predefined identifiers so that a new track that starts in a certain spatial region in the space is assigned the identifier of that spatial region. As an alternative, as soon as a track is started and then has its position tracked, the identifier of the track is associated with the latest position of the track, even after the track has ended. In this way a map which associates positions and identifiers is built dynamically over time. The next time a track is started at a certain position, it may be assigned the identifier associated with that position according to the map. If there is not identifier in the map for that position, it may be assigned an arbitrary identifier which does not exist in the map. In this way, each time occupancy is detected at a certain location it will be assigned the same identifier.

In order to remove false detections, tracks which are outside of a region of interest in the space may be removed. To exemplify, the region of interest may correspond to a room in the space. Hence, tracks which are outside of the room in the space may be removed. The above is just one example of how the tracking may be performed. If desired, more advanced tracking algorithms which use motion filters, such as a Kalman filter or a particle filter may be used.

In other embodiments, a user may define regions in the space which are of particular interest. Each region may further be associated with an identifier. By way of example, in an office scenario, the user may define a region around each desk. Occupied positions that fall within a region in the space may then be associated with the identifier of the region. Occupied positions that do not fall within a region may be ignored. In such an embodiment no tracking of the occupied positions needs to be carried out.

It will be appreciated that a person skilled in the art can modify the above-described embodiments in many ways and still use the advantages of the invention as shown in the embodiments above. The invention should not be limited to the shown embodiments but should only be defined by the appended claims. Additionally, as the skilled person understands, the shown embodiments may be combined.

## Claims

1. A method for determining occupied positions in a space, comprising:
receiving (S02) detections of object movement from a radar monitoring the space, wherein each detection is associated with a position in the space and a time point when the detection was made, wherein the received detections include detections from a plurality of time points corresponding to a plurality of frames of radar data,
accumulating (S04) detections that have a time point within a first time period (T1) of predefined duration, wherein the first time period (T1) of predefined duration includes several frames of radar data,
identifying (S06) a set of clusters of detections in the space (502a, 502b) by analyzing similarity in position of the accumulated detections (502), wherein each cluster includes a plurality of detections that were made at various time points during the first time period (T1),
removing (S08), from the set of clusters, any cluster whose detections are temporally distributed within a proportion of the first time period (T1) which is below a predefined proportion threshold, and
after the removing, determining (S10) that positions in the space that correspond to the set of clusters were occupied during the first time period (T1).

2. The method of claim 1, wherein each detection is further associated with a velocity of the object movement, and wherein in the step of accumulating (S04) only detections having a velocity below a first velocity threshold are accumulated.

3. The method of claim 2, wherein the first velocity threshold is lower than an average walking speed of a person.

4. The method of any one of the preceding claims, wherein the step of removing (S08) further comprises removing, from the set of clusters, any cluster for which:
a temporal correlation between the detections of the cluster and the detections of another cluster in the set of clusters is above a temporal correlation threshold, and
a distance from the detections of the cluster to the radar is larger than a distance from the detections of said another cluster to the radar.

5. The method of any one of the preceding claims, wherein the proportion of the first time period (T1) within which the detections of a cluster are temporally distributed is determined as a proportion of the first time period (T1) during which the detections of the cluster were present.

6. The method of any one of claims 1-4, wherein the proportion of the first time period (T1) within which the detections of a cluster are temporally distributed is determined by comparing a dispersion measure of the time points of the detections of the cluster to the predefined duration of the first time period (T1).

7. The method of any one of the preceding claims, wherein the step of identifying (S06) a set of clusters of detections in the space (502a, 502b) includes applying a clustering algorithm to positions of the accumulated detections (502).

8. The method of any one of the preceding claims, wherein the step of identifying (S06) a set of clusters of detections in the space (502a, 502b) includes:
generating an occupancy map (600) of the space by defining a plurality of grid cells in the space, and counting for each grid cell how many of the accumulated detections (502) that have a position in the grid cell, and identifying the set of clusters by performing blob detection in the occupancy map (600) of the space.

9. The method of claim 8, wherein the blob detection includes identifying local maxima in the occupancy map (600).

10. The method of any one of the preceding claims, wherein the method is repeated for a subsequent time period of predefined duration.

11. The method of claim 10, further comprising:
tracking the positions in the space that are determined to be occupied between the first time period (T1) and the subsequent time period.

12. The method of claim 11, further comprising:
removing tracks which are outside of a region of interest in the space.

13. A device for determining occupied positions in a space, wherein the device comprises circuitry configured to:
receive detections of object movement from a radar (108) monitoring the space (100), wherein each detection is associated with a position in the space (100) and a time point when the detection was made, wherein the received detections include detections from a plurality of time points corresponding to a plurality of frames of radar data,
accumulate detections that have a time point within a first time period (T1) of predefined duration, wherein the first time period (T1) of predefined duration includes several frames of radar data,
identify a set of clusters of detections in the space (502a, 502b) by analyzing similarity in position of the accumulated detections (502), wherein each cluster includes a plurality of detections that were made at various time points during the first time period (T1),
remove, from the set of clusters, any cluster (700b) whose detections are temporally distributed within a proportion of the first time period (T1) which is below a predefined proportion threshold, and
after the removal, determine that positions in the space that correspond to the set of clusters were occupied during the first time period (T1).

14. A non-transitory computer-readable medium comprising computer program code which, when executed by a device with processing capability, causes the device to carry out the method of any one of claims 1-12.

## Patentansprüche

1. Verfahren zum Bestimmen belegter Positionen in einem Raum, das umfasst:
Empfangen (S02) von Detektionen einer Objektbewegung von einem Radar, das den Raum überwacht, wobei jede Detektion mit einer Position im Raum und einem Zeitpunkt, zu dem die Detektion vorgenommen wurde, assoziiert ist, wobei die empfangenen Detektionen Detektionen von einer Vielzahl von Zeitpunkten, die einer Vielzahl von Rahmen von Radardaten entsprechen, einschließen,
Akkumulieren (S04) von Detektionen, die einen Zeitpunkt innerhalb einer ersten Zeitperiode (T1) vordefinierter Dauer aufweisen, wobei die erste Zeitperiode (T1) vordefinierter Dauer mehrere Rahmen von Radardaten einschließt,
Identifizieren (S06) eines Satzes von Clustern von Detektionen in dem Raum (502a, 502b) durch Analysieren einer Ähnlichkeit in der Position der akkumulierten Detektionen (502), wobei jeder Cluster eine Vielzahl von Detektionen, die zu verschiedenen Zeitpunkten während der ersten Zeitperiode (T1) durchgeführt wurden, einschließt,
Entfernen (S08), aus dem Satz von Clustern, eines beliebigen Clusters, dessen Detektionen zeitlich innerhalb eines Anteils der ersten Zeitperiode (T1), der unter einer vordefinierten Anteilsschwelle liegt, verteilt sind, und
nach dem Entfernen, Bestimmen (S10), dass Positionen im Raum, die dem Satz von Clustern entsprechen, während der ersten Zeitperiode (T1) belegt waren.

2. Verfahren nach Anspruch 1, wobei jede Detektion ferner mit einer Geschwindigkeit der Objektbewegung assoziiert ist und wobei im Schritt des Akkumulierens (S04) nur Detektionen mit einer Geschwindigkeit unterhalb einer ersten Geschwindigkeitsschwelle akkumuliert werden.

3. Verfahren nach Anspruch 2, wobei die erste Geschwindigkeitsschwelle niedriger als eine durchschnittliche Gehgeschwindigkeit einer Person ist.

4. Verfahren nach einem der vorhergehenden Ansprüche, wobei der Schritt des Entfernens (S08) ferner ein Entfernen, aus dem Satz von Clustern, eines beliebigen Clusters umfasst, für das:
eine zeitliche Korrelation zwischen den Detektionen des Clusters und den Detektionen eines anderen Clusters im Satz von Clustern oberhalb einer zeitlichen Korrelationsschwelle liegt und
ein Abstand von den Detektionen des Clusters zum Radar größer als ein Abstand von den Detektionen des anderen Clusters zum Radar ist.

5. Verfahren nach einem der vorhergehenden Ansprüche, wobei der Anteil der ersten Zeitperiode (T1), innerhalb dessen die Detektionen eines Clusters zeitlich verteilt sind, als ein Anteil der ersten Zeitperiode (T1), während dessen die Detektionen des Clusters vorhanden waren, bestimmt wird.

6. Verfahren nach einem der Ansprüche 1 bis 4, wobei der Anteil der ersten Zeitperiode (T1), innerhalb dessen die Detektionen eines Clusters zeitlich verteilt sind, durch Vergleichen eines Dispersionsmaßes der Zeitpunkte der Detektionen des Clusters mit der vordefinierten Dauer der ersten Zeitperiode (T1) bestimmt wird.

7. Verfahren nach einem der vorhergehenden Ansprüche, wobei der Schritt des Identifizierens (S06) eines Satzes von Clustern von Detektionen in dem Raum (502a, 502b) ein Anwenden eines Cluster-Algorithmus auf Positionen der akkumulierten Detektionen (502) einschließt.

8. Verfahren nach einem der vorhergehenden Ansprüche, wobei der Schritt des Identifizierens (S06) eines Satzes von Clustern von Detektionen in dem Raum (502a, 502b) einschließt:
Erzeugen einer Belegungskarte (600) des Raums durch Definieren einer Vielzahl von Gitterzellen im Raum und Zählen, für jede Gitterzelle, wie viele der akkumulierten Detektionen (502) eine Position in der Gitterzelle aufweisen, und Identifizieren des Satzes von Clustern durch Durchführen einer Blob-Detektion in der Belegungskarte (600) des Raums.

9. Verfahren nach Anspruch 8, wobei die Blob-Detektion ein Identifizieren lokaler Maxima in der Belegungskarte (600) einschließt.

10. Verfahren nach einem der vorhergehenden Ansprüche, wobei das Verfahren für eine nachfolgende Zeitperiode vordefinierter Dauer wiederholt wird.

11. Verfahren nach Anspruch 10, ferner umfassend:
Verfolgen der Positionen im Raum, für die bestimmt wird, dass sie zwischen der ersten Zeitperiode (T1) und der nachfolgenden Zeitperiode belegt sind.

12. Verfahren nach Anspruch 11, ferner umfassend:
Entfernen von Spuren, die außerhalb eines interessierenden Bereichs im Raum liegen.

13. Vorrichtung zum Bestimmen belegter Positionen in einem Raum, wobei die Vorrichtung eine Schaltungsanordnung umfasst, die konfiguriert ist zum:
Empfangen von Detektionen einer Objektbewegung von einem Radar (108), das den Raum (100) überwacht, wobei jede Detektion mit einer Position in dem Raum (100) und einem Zeitpunkt, zu dem die Detektion vorgenommen wurde,
assoziiert ist, wobei die empfangenen Detektionen Detektionen von einer Vielzahl von Zeitpunkten, die einer Vielzahl von Rahmen von Radardaten entsprechen, einschließen,
Akkumulieren von Detektionen, die einen Zeitpunkt innerhalb einer ersten Zeitperiode (T1) vordefinierter Dauer aufweisen, wobei die erste Zeitperiode (T1) vordefinierter Dauer mehrere Rahmen von Radardaten einschließt,
Identifizieren eines Satzes von Clustern von Detektionen in dem Raum (502a, 502b) durch Analysieren einer Ähnlichkeit in der Position der akkumulierten Detektionen (502), wobei jeder Cluster mehrere Detektionen, die zu verschiedenen Zeitpunkten während der ersten Zeitperiode (T1) durchgeführt wurden, einschließt,
Entfernen, aus dem Satz von Clustern (700b), eines beliebigen Clusters, dessen Detektionen zeitlich innerhalb eines Anteils der ersten Zeitperiode (T1), der unter einer vordefinierten Anteilsschwelle liegt, verteilt sind, und
nach der Entfernung, Bestimmen, dass Positionen im Raum, die dem Satz von Clustern entsprechen, während der ersten Zeitperiode (T1) belegt waren.

14. Nichtflüchtiges computerlesbares Medium, das Computerprogrammcode umfasst, der, wenn er durch eine Vorrichtung mit Verarbeitungsfähigkeit ausgeführt wird, bewirkt, dass die Vorrichtung das Verfahren nach einem der Ansprüche 1 bis 12 ausführt.

## Revendications

1. Procédé de détermination de positions occupées dans un espace, le procédé comprenant les étapes suivantes :
recevoir (S02) des détections de mouvement d'objet depuis un radar surveillant l'espace, chaque détection étant associée à une position dans l'espace et à un point temporel relatifs à la réalisation de la détection, les détections reçues comprenant des détections d'une pluralité de points temporels correspondant à une pluralité de trames de données radar,
accumuler (S04) des détections qui ont un point temporel compris dans une première période temporelle (T1) de durée prédéfinie, où la première période temporelle (T1) de durée prédéfinie comporte plusieurs trames de données radar,
identifier (S06) un ensemble de grappes de détections dans l'espace (502a, 502b) par analyse d'une similarité de position parmi les détections accumulées (502), chaque grappe comprenant une pluralité de détections qui ont été effectuées à différents moments au cours de la première période temporelle (T1),
supprimer (S08), de l'ensemble des grappes, toute grappe dont les détections sont réparties temporellement dans une proportion de la première période temporelle (T1) qui est inférieure à un seuil de proportion prédéfini, et après le retrait, déterminer (S10) que des positions dans l'espace correspondant à l'ensemble des grappes étaient occupées pendant la première période temporelle (T1).

2. Procédé selon la revendication 1, dans lequel chaque détection est en outre associée à une vitesse du mouvement de l'objet, et dans lequel, dans l'étape d'accumulation (S04), seules les détections ayant une vitesse inférieure à un premier seuil de vitesse sont accumulées.

3. Procédé selon la revendication 2, dans lequel le premier seuil de vitesse est inférieur à la vitesse de marche moyenne d'une personne.

4. Procédé selon l'une quelconque des revendications précédentes, dans lequel l'étape de suppression (S08) comprend en outre de supprimer de l'ensemble de grappes toute grappe pour laquelle :
une corrélation temporelle entre les détections de la grappe et les détections d'une autre grappe de l'ensemble de grappes est supérieure à un seuil de corrélation temporelle, et
la distance des détections de la grappe par rapport au radar est supérieure à la distance des détections de ladite autre grappe par rapport au radar.

5. Procédé selon l'une quelconque des revendications précédentes, dans lequel la proportion de la première période de temps (T1) dans laquelle les détections d'une grappe sont réparties temporellement est déterminée comme étant une proportion de la première période de temps (T1) pendant laquelle les détections de la grappe étaient présentes.

6. Procédé selon l'une quelconque des revendications 1 à 4, dans lequel la proportion de la première période de temps (T1) dans laquelle les détections d'une grappe sont réparties temporellement est déterminée en comparant une mesure de dispersion des points temporels des détections de la grappe à la durée prédéfinie de la première période de temps (T1).

7. Procédé selon l'une quelconque des revendications précédentes, dans lequel l'étape d'identification (S06) d'un ensemble de grappes de détections dans l'espace (502a, 502b) comprend l'application d'un algorithme de groupement en grappes à des positions des détections accumulées (502).

8. Procédé selon l'une quelconque des revendications précédentes, dans lequel l'étape d'identification (S06) d'un ensemble de grappes de détections dans l'espace (502a, 502b) comprend les étapes suivantes :
générer une carte d'occupation (600) de l'espace par la définition d'une pluralité de cellules de grille dans l'espace, et compter, pour chaque cellule de grille, combien des détections accumulées (502) ont une position dans la cellule de grille, et identifier l'ensemble de grappes par détection de blobs dans la carte d'occupation (600) de l'espace.

9. Procédé selon la revendication 8, dans lequel la détection de blobs comprend l'identification de maxima locaux dans la carte d'occupation (600).

10. Procédé selon l'une quelconque des revendications précédentes, dans lequel le procédé est répété pendant une période de temps ultérieure de durée prédéfinie.

11. Procédé selon la revendication 10, comprenant en outre l'étape suivante :
suivre les positions dans l'espace qui sont déterminées comme étant occupées entre la première période temporelle (T1) et la période temporelle suivante.

12. Procédé selon la revendication 11, comprenant en outre l'étape suivante :
supprimer des pistes qui se trouvent en dehors d'une région d'intérêt dans l'espace.

13. Dispositif de détermination de positions occupées dans un espace, le dispositif comprenant des circuits configurés pour :
recevoir des détections de mouvement d'objet depuis un radar (108) surveillant l'espace (100), chaque détection étant associée à une position dans l'espace (100) et à un point temporel relatifs à la réalisation de la détection, les détections reçues comprenant des détections d'une pluralité de points temporels correspondant à une pluralité de trames de données radar, accumuler des détections qui ont un point temporel compris dans une première période temporelle (T1) de durée prédéfinie, où la première période temporelle (T1) de durée prédéfinie comporte plusieurs trames de données radar,
identifier un ensemble de grappes de détections dans l'espace (502a, 502b) par analyse d'une similarité de position parmi les détections accumulées (502), chaque grappe comprenant une pluralité de détections qui ont été effectuées à différents moments au cours de la première période temporelle (T1),
supprimer, de l'ensemble des grappes, toute grappe dont les détections sont réparties temporellement dans une proportion de la première période temporelle (T1) qui est inférieure à un seuil de proportion prédéfini, et
après le retrait, déterminer que des positions dans l'espace correspondant à l'ensemble des grappes étaient occupées pendant la première période temporelle (T1).

14. Support non transitoire lisible par ordinateur comprenant un code de programme informatique qui, lorsqu'il est exécuté par un dispositif doté d'une capacité de traitement, amène le dispositif à réaliser le procédé selon l'une quelconque des revendications 1 à 12.
